# EUROPEAN PATENT APPLICATION

(11) **EP 3 881 918 A1**
(43) Date of publication of application: **22.09.2021**
(21) Application number: 21163606.3
(22) Date of filing: 19.03.2021
(51) Int. Cl.: B01D 5/00, B08B 3/04, C23G 5/04

(54) **MACHINE FOR WASHING OBJECTS AND OPERATING METHOD THEREOF**

(30) Priority: 19.03.2020 IT 202000005914
(71) Applicant: Cemastir Lavametalli S.r.l., 40033 Casalecchio di Reno (BO) (IT)
(72) Inventor: TROMPONI, Alberto, 40033 CASALECCHIO DI RENO (BO) (IT); MAZZACURATI, William, 40033 CASALECCHIO DI RENO (BO) (IT)
(74) Representative: Tiburzi, Andrea

(57) **Abstract**

The present invention relates to a machine for washing objects (1), such as metallic and non-metallic objects, in particular for washing metal parts, comprising: a washing unit (11), comprising a washing cabin (2) for containing one or more objects to be washed, by means of at least one solvent, wherein said at least one solvent contains a solvent of the chlorinated halogenates category, and at least one tank (31, 32) for containing said solvent for washing one or more objects; and a vacuum maintenance system (7) comprising pipelines (72), connected for extracting gas from said washing unit (11), wherein said gases include solvent vapours, and a vacuum pump (71), connected to said pipelines (72), configured for sucking said gases collected in said pipelines (72); characterized in that it comprises a cooling unit (12) having a heat exchanger unit (6), wherein said heat exchanger unit (6) is connected between said pipelines (72) and said vacuum pump (71), and wherein said heat exchanger unit (6) is configured for lowering the temperature of said gases collected in said pipelines (72), so as to condense the solvent contained in said gases.

The present invention also relates to a method (100) for operating a machine for washing objects (1).

## Description

The present invention relates to a machine for washing objects.

### Field of the invention

More specifically, the invention relates to a machine intended for washing objects, in particular metal objects, but also non-metal objects, of any size, designed and manufactured in particular to reduce emissions and consumption in case of solvents are used, in particular solvents belonging to the category of chlorinated halogenates.

In the following the description will be directed to the washing of metal objects, but it is clear that the same should not be considered limited to this specific use.

### Prior art

As is well known, in many industrial sectors it is necessary to wash metal parts. These parts can be, for example, mechanical members, such as similar toothed wheels, or eyeglass screws, and so on.

Machines for washing metal parts are widely used in the sector in various industrial sectors such as automotive, aerospace, engineering, electromechanics, electronics, optics and eyewear, heat treatments. In addition, these machines are used for multiple applications, such as motors, small mechanical parts, galvanized material, aluminum containers, steel parts, pipes and fittings, pistons, balls, valves, connectors, heat exchangers, accessories for repair shops, ball-pens, keys and locks, electronic boards, components for air conditioning systems, hydraulic components, precious metals, kitchen tools, polyurethane soles, Teflon gaskets.

Such apparatuses are also commonly called metal washing machines, although they can also be used for washing non-metallic objects.

There are currently three types of machines on the market.

A first type of machine involves washing the metal parts with soap and water. Such machines are particularly wasteful in terms of energy consumption of chemicals.

A second type of machine provides for the use of solvents belonging to the category of chlorinated halogenates, and in particular tetrachlorethylene-perchloroethylene, and more particularly perchloroethylene. Since these substances are potentially carcinogenic and toxic, they are regulated in terms of consumption and emissions. Therefore, this means that the machines that use this washing technology must provide suitable accessories to respect emissions and consumption. These accessories are particularly expensive and involve a considerable design complication.

Among the accessories which said machines that use perchloroethylene as a solvent must be equipped with, there are particular filters, rather expensive, and systems for calculating the overall use made by the solvent machine. In fact, the legislation provides for emission parameters into the atmosphere of specific quantities of perchloroethylene that can be dispersed into the atmosphere by the machine in terms of parts per million (ppm).

These filters are of the active carbons type, and are installed both in machines that have a vacuum and in machines that work in the atmosphere. These filters are designed to prevent solvent vapors from being dispersed into the environment.

A third type of washing machine currently available on the market uses modified alcohol or hydrocarbon as a solvent, which is part of the same class as modified alcohol, AIII, and has the same chemical/physical characteristics and can be used as an alternative to the modified alcohol itself. The latter is also subject to regulations, although much less stringent than those relating to chlorinated halogenated solvents. The two solvents (modified alcohol and hydrocarbon) have the same flash point (about 62 °C). It is, therefore, necessary to heat these solvents to a higher temperature. Therefore, the legislation requires maintaining a constant vacuum level within the machine of 100 mbar up to 0,5 mbar for the drying phase. Such a degree of vacuum can only be achieved with complex and delicate vane pumps. In any case, the use of modified alcohol entails considerable wear on the washing machines.

For some years there have already been machines that are able to alternatively use the two solvents indicated above, namely perchloroethylene and modified alcohol.

It appears evident that the design need is felt in the field to simplify and make more convenient the possibility of using machines operating with perchloroethylene as a solvent, but which can be more competitive in terms of the overall cost.

### Scope of the invention

In light of the above, it is, therefore, an object of the present invention to propose a machine for washing objects which can use perchloroethylene as a solvent and which does not require the filters required for limiting the diffusion of solvent in the atmosphere.

Another object of the invention is to provide for the possibility that the machine for washing objects can also operate with modified alcohol.

### Object of the invention

It is therefore specific object of the present invention a machine for washing objects, such as metallic and non-metallic objects, in particular for washing metal parts, comprising: a washing unit, comprising a washing cabin for washing one or more objects to be washed, by means of at least one solvent, and at least one tank for containing said at least one solvent for washing one or more objects; and a vacuum maintenance system comprising pipelines, connected for extracting gas from said washing unit, wherein said gases include solvent vapours, and a vacuum pump, connected to said pipelines, configured for sucking said gases collected in said pipelines; characterized in that it comprises a cooling unit having a heat exchanger unit, wherein said heat exchanger unit is connected between said pipelines and said vacuum pump, and wherein said heat exchanger unit is configured for lowering the temperature of said gases collected in said pipelines, so as to condense the solvent contained in said gases,
wherein said at least one solvent used for washing in said washing unit belongs to the category of chlorinated halogenates, in particular perchloroethylene.

According to the invention, said washing cabin may comprise a drum for washing one or more objects to be washed, by means of said at least one solvent.

Always according to the invention, said at least one solvent may include perchloroethylene.

Still according to the invention, said heat exchanger unit may be configured to lower the temperature of said gases extracted by said vacuum pump to a temperature range between -23°C and -27°C, when said solvent used for washing in said washing unit is a solvent of the chlorinated halogenates category, in particular perchloroethylene.

Advantageously according to the invention, said heat exchanger unit may be configured to lower the temperature of said gases extracted by said vacuum pump to a temperature of -25 °C.

Further according to the invention, said heat exchanger unit ay be configured to lower the temperature of said gases extracted by said vacuum pump to a temperature range between -13°C and -17°C, when the solvent used for washing in said washing unit is modified alcohol.

Preferably according to the invention, said heat exchanger unit (6) comprises a first heat exchanger, for effectively condensing solvent vapours contained in the gases sucked by said vacuum pump from said pipelines of said vacuum system, and a second heat exchanger for maintaining the solvent condensed by said first heat exchanger in a liquid state.

Always according to the invention, said machine may comprise a solvent separator, connected to said second heat exchanger, which is configured to separate the solvent from the possible aqueous component, so that it can be recycled, when said at least one solvent used for washing in said washing unit is a solvent of the chlorinated halogenates category, such as perchloroethylene.

Still according to the invention, said cooling unit may comprise a cooling system comprising a pipeline circuit containing a mixture of water and glycol, and a heat exchanger connected to a refrigeration machine for cooling said mixture of water and glycol contained in said pipelines, wherein said refrigeration machine may be configured to cool the mixture of water and glycol to a temperature of -15 ±2 °C, when said at least one solvent used for washing in said washing unit is modified alcohol, and to about -25 °C ±2°C when said solvent used for washing in said washing unit belongs to the chlorinated halogenates category, in particular perchloroethylene.

Advantageously according to the invention, said washing unit may comprise a distiller hydraulically connected to said washing cabin, so that the solvent for washing the objects contained into said washing cabin can be sucked from said washing cabin and distilled by the distiller and recovered in said at least one tank.

It is further object of the present invention an operating method of a machine for washing objects, such as metallic and non-metallic objects, wherein said machine is of the type according to any one of the preceding claims, and wherein said method comprises the following steps: inserting at least one object to be washed in said washing cabin; washing one or more objects to be washed contained in said washing cabin by means of at least one solvent; sucking the gases by means of said vacuum system, containing the vapours of the solvent, used for washing, collected by said pipelines and sucked by said vacuum pump; lowering the temperature of said gases sucked in said sucking step to a temperature range between - 23°C and -27°C, before they arrive at said vacuum pump, when said washing unit works using a solvent belonging to the chlorinated halogenates category, in particular perchloroethylene, so as to condense the solvent contained in said gases.

Always according to the invention, said temperature lowering step may comprise the following sub-steps: lowering the temperature of said gases sucked in said sucking step to a temperature range between -23 °C and -27°C, before they arrive at said vacuum pump, when said washing unit works using a solvent belonging to the chlorinated halogenates category, in particular perchloroethylene, by means of said first heat exchanger of said heat exchanger unit; and maintaining the solvent condensed by said first heat exchanger in a liquid state by means of said second heat exchanger of said heat exchanger unit.

Still according to the invention, said method may comprise the further step of picking up the condensed solvent in said temperature lowering step by means of a solvent separator, connected to said second heat exchanger, wherein said solvent separator is capable of separating said at least one solvent from any aqueous component, so that it can be recycled, when said solvent is a solvent belongs to the chlorinated halogenates category, such as perchloroethylene.

### Brief description of the figures

The present invention will be now described, for illustrative but not limitative purposes, according to its preferred embodiments, with particular reference to the figures of the enclosed drawings, wherein:
figure 1 illustrates a basic hydraulic scheme of the machine for washing objects according to the present invention;
figure 2 illustrates the hydraulic scheme of an embodiment of a machine for washing objects according to the present invention
figure 3 illustrates an overall view of a machine for washing objects according to the present invention;
figure 4 illustrates an open view of the machine for washing objects according to figure 3;
figure 5 illustrates a refrigerating machine installed in the object washing machine according to figure 3;
figure 6 illustrates one of the parts of the machine for washing objects according to figure 3;
figure 7 illustrates a second view of the parts of the machine for washing objects according to figure 3; and
figure 8 illustrates the steps of an operating method of the machine for washing objects according to the present invention.

### Detailed description of the figures

In the various figures similar parts will be indicated with the same numerical references.

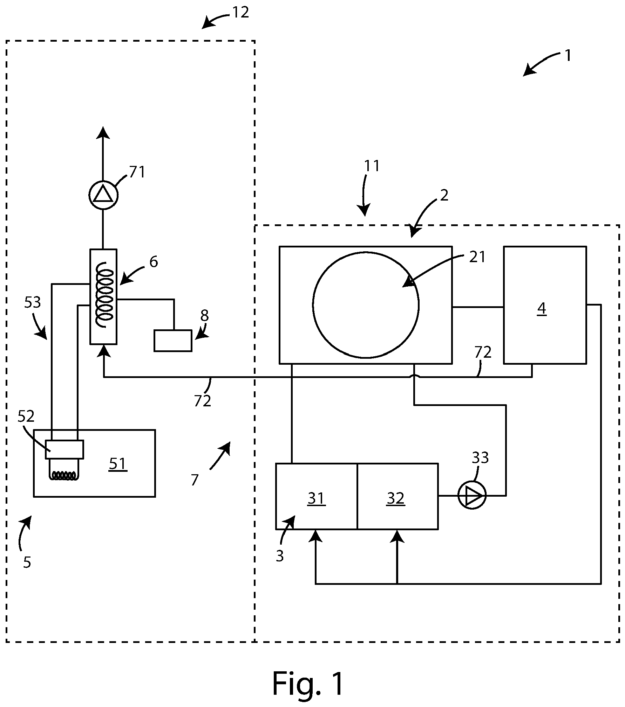

With reference to figure 1, the basic scheme of a machine for washing objects 1 according to the present invention can be seen.

The machine for washing objects 1 essentially comprises a washing cabin 2, a tank group 3, a distiller 4, a cooling system 5, a heat exchanger unit 6, and a vacuum system 7.

In particular, the machine 1 can be divided into a washing unit 11 (identified by the dotted line on the right of the figure), which includes the washing cabin 2, the tank group 3 and the distiller 4, as well as all the other parts that concur to the actual washing of the objects, and a cooling unit 12 (identified by the dotted line on the left of the figure), which comprises the cooling system 5, and a heat exchanger unit 6.

The washing cabin 2 comprises a drum 21, intended to receive the objects (not shown in the figures), metallic or not, to be washed.

In some embodiments, the drum 21 can optionally be rotated to facilitate the washing of the object to be washed.

The tank group 3 comprises a first tank 31 and a second tank 32.

Generally, one of the two tanks 31 and 32 has a different size from the each other. The tanks 31 and 32 are intended to contain the solvent to be used for the washing. In the so-called "bimodal" machines the tanks 31 and 32 can be filled alternatively with modified alcohol or perchloroethylene. In this way, it is possible to alternatively wash the objects in the drum 21 with modified alcohol or with perchloroethylene.

The tank group 3 also comprises a pump 33, for pumping the solvent, i.e., as mentioned, modified alcohol or perchloroethylene, to be used for washing the objects contained in the drum 21, to convey it into the drum 21 itself.

The washing machine 1 also comprises a distiller 4, hydraulically connected to the washing cabin 2, so that the solvent for washing the objects contained in the drum 21 of the washing cabin 2 can be taken from said washing cabin 2, carried by means of a pump in the distiller 4, suitably distilled by the distiller 4 itself, and recovered in said first 31 or in said second 32 tank.

The pump 33 sends the solvent from the cabin 2 to the distiller 4. The distiller 4 evaporates the solvent, which then passes through a heat exchanger to return it to liquid and then to the tanks 31 or 32.

During the washing phases the solvent, modified alcohol or perchloroethylene, is kept in a temperature range between 60 and 80 °C.

Once the washing of the objects contained in the drum 21 is finished, the latter can be extracted from the washing cabin 2 perfectly dry, by extracting the drum 21.

The machine 1, for safety reasons, also comprises a system for maintaining the vacuum 7, isolated for maintaining the vacuum in the washing unit 11 of said machine 1. In fact, the solvents being kept in said washing unit 11 at high temperatures, as mentioned above, can easily catch on fire. Therefore, the system for maintaining the vacuum, generically indicated in figure 1 with the numerical reference 7, allows to extract the air, and therefore the oxygen, from the machine 1, and in particular from the washing unit 11, and therefore, in particular, from the washing cabin 2, from the tank group 3 and from the distiller 4.

The vacuum system 7 comprises suitable pipes 72, connected to the washing cabin 2, to the tank group 3 and to the distiller 4, and to all the other parts of the machine 1 of the washing unit 11, and a vacuum pump 71, connected to said pipes 72, which exits directly into the atmosphere. The vacuum pump 71 sucks all the gases present in the machine 1, allowing even traces of humidity to be eliminated.

Clearly, part of the solvent, while it is used and recirculated by the pump 33 and distilled by the distiller 4, evaporates and it is collected by the circuit for maintaining the vacuum, which as mentioned above, is isolated. This is also due to the high operating temperature to which it is subjected to.

In other words, the vacuum system 7 "collects" part of the solvent, modified alcohol or perchloroethylene, which evaporates during the operation of the machine 1 in the washing unit 11.

The machine 1 for washing object also comprises a cooling system 5.

The cooling system 5 comprises a refrigerating machine 51, which cools a cooling fluid, which in the embodiment at issue is freon, but which can also be any other liquid or fluid with properties similar to freon. The cooling circuit also comprises a heat exchanger 52 for cooling a mixture of water and glycol, which circulates by means of a pump (not shown in the figure) in suitable pipes 53.

The refrigerating machine 51 cools the mix of water and glycol to a temperature of -15 ± 2 °C, when the washing machine 1 works using modified alcohol as a solvent, and to about -25 ± 2 °C, when the washing machine 1 works using perchloroethylene as a solvent, as will be better explained below.

The heat exchanger unit 6 is arranged upstream of the vacuum pump 71. Said heat exchanger unit 6 is cooled by said pipes 53, in which, as mentioned, the mix of water and glycol circulates, so as to lower the temperature of the mixture of the air extracted by the vacuum pump 71 from the vacuum circuit. Indeed, when the machine 1 operates using perchloroethylene as a solvent, the heat exchanger unit 6 cools the air mixture extracted from the vacuum pump 71 down to -25 °C, thus condensing the perchloroethylene vapors contained in the air mixture extracted by the vacuum pump 71, which is collected in a solvent separator 8; instead, when the machine 1 operates using modified alcohol as a solvent, the heat exchanger unit 6 cools the air mixture extracted from the vacuum pump 71 down to -15 °C, as mentioned above with a temperature range of ± 2 °C.

The solvent recovered from the heat exchanger unit, when the perchloroethylene is used, is collected in the solvent separator 8, which is adapted to separate the solvent from the possible aqueous component.

As can be seen, unlike the machines of the known art, there are no filters downstream of the vacuum pump 71, which, as it is known, are very expensive, and intended to avoid the dispersion of the perchloroethylene particles in the air.

The operation of the machine for washing objects 1, such as metal objects and the like, described above, is as follows.

When an object is introduced into the drum 21 so as to be washed, in case washing by means of perchloroethylene is chosen, said solvent is extracted from the tanks 31 or 32 and by means of the pump 33 inserted into said drum 21. During the washing, of course, the solvent under examination is distilled by means of the distiller 4 and returned into the tanks 31 or 32.

During the washing of the object, the vacuum pump 71 maintains the vacuum inside the system to maintain the vacuum 7, which sucks in all the gases present in the machine 1, and in particular in said washing unit 11, by means of the pipes 72, which reach all the operating parts of the washing unit 11.

Although the pump 71 maintains the vacuum inside the vacuum system 7, as said, part of the solvent used, both modified alcohol and perchloroethylene tend to evaporate and are inevitably sucked into the pipes 72 of the vacuum system 7 by the same vacuum pump 71. Therefore, upstream of the vacuum pump 71, before the dispersion of the gases sucked in by the vacuum system, containing, as mentioned, the vapors of the solvent used in the washing are dispersed into the environment, the heat exchanger unit 6 lowers the temperature of these gases, thus condensing, in particular, the solvent particles, and in particular those of perchloroethylene, which are suitably recovered in the solvent separator 8.

In particular, when used as a solvent for washing perchloroethylene, the cooling system 5 cools the extracted gas washing unit 11 by means of the vacuum pump 71 up to -25 °C, avoiding in this way that the vapors of perchloroethylene are dispersed in the air.

Furthermore, as mentioned, the condensed perchloroethylene is collected in the solvent separator 8, which separates it from the aqueous component that may be present and allows its reintroduction and therefore its recycling in one of the tanks 31 or 32, to the benefit of the environment.

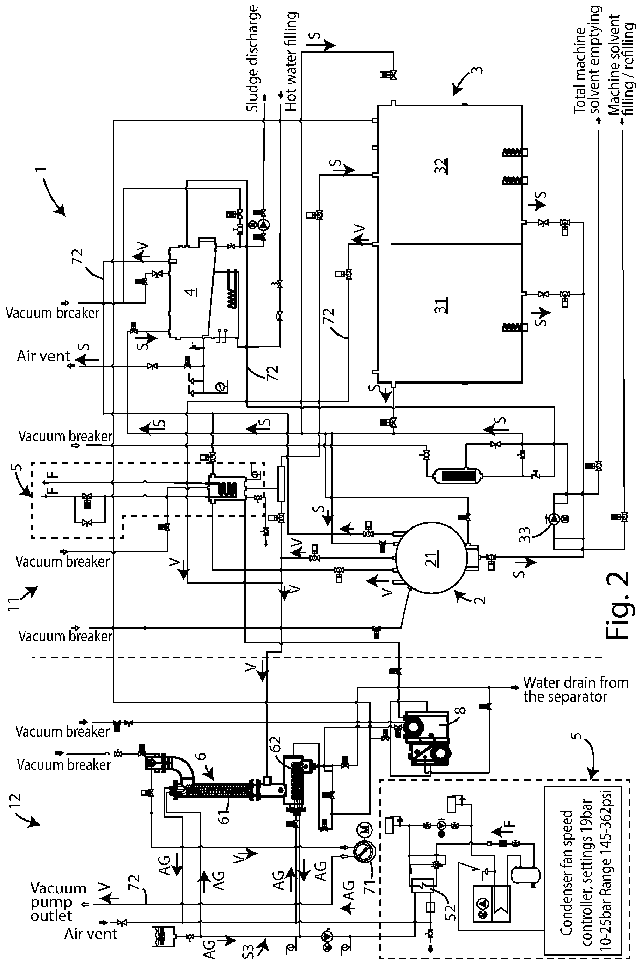

Referring now to figure 2, the piping scheme of an embodiment of the washing machine 1 according to the present invention is observed, in which the washing unit 11 and the cooling unit 12 are identified, ideally divided by a vertical dashed line.

The figure shows in particular the washing cabin 2 and the relative drum 21, the pump 33 for the recirculation of the solvents contained in the first 31 and in the second 32 tank, for containing the washing solvent, e.g., modified alcohol or perchloroethylene, and the distiller 4.

The scheme of figure 2 also shows the position of the heat exchanger unit 6, arranged upstream of the vacuum pump 71.

Some of the main pipes are indicated with arrows. In particular, in figure 2 the arrows identified with the letter S show the solvent circulation pipes, which, as mentioned, in the present embodiment can be modified alcohol or perchloroethylene.

The arrows indicated with the V are the pipes 72 relating to the vacuum circuit.

The letter F indicates the freon circulation pipes which, as can be seen, are all arranged inside the cooling system 5.

AG indicates the circulation in the pipes 53 of the mixture of water and glycol, which, as can be seen, pass through the exchanger 52 and cool the heat exchanger unit 6.

Referring now in particular to the heat exchanger unit 6, it can be seen that it has a first heat exchanger 61, intended to effectively condense the solvent vapors, such as perchloroethylene, contained in the gases sucked in by the vacuum pump 71 coming from the pipes 72 of the vacuum system 7 from said washing unit 11, before the same gases, finally deprived of the solvent vapors, are dispersed into the environment by the vacuum pump 71; and a second heat exchanger 62, intended to maintain at a low temperature so as to keep the solvent condensed by said first heat exchanger 61 in the liquid state. Naturally, said second exchanger 62 always maintains at -25 °C the perchloroethylene, and at -15 °C the modified alcohol. In fact, the freshly condensed solvent could evaporate again if it were not kept at a suitable temperature.

As can be seen, the second heat exchanger 62 is connected to the solvent separator 8, which, as said, is capable of separating the modified perchloroethylene from the possible aqueous component so as to discharge the latter and recover the solvent by binding it in one of the tanks 31 or 32 of said tank group 3.

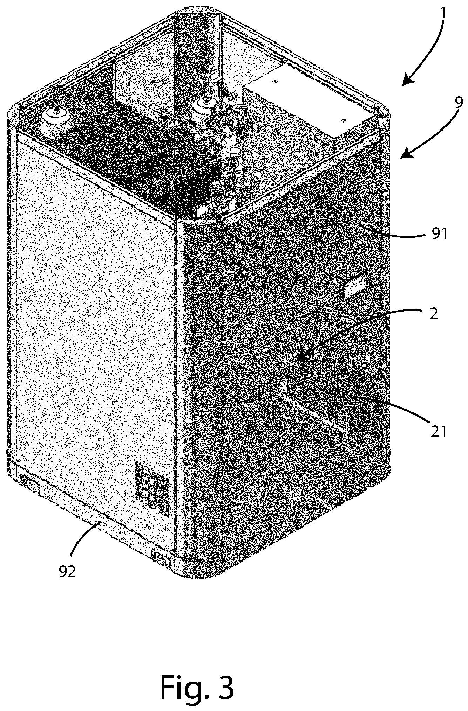

Referring to figures 3-7, an embodiment of a machine for washing objects 1 is observed.

In particular, figure 3 shows the machine 1 that comprises a frame 9 having a containment chassis 91 and a support base 92. In particular, the drum 21 is extracted so as to be able to insert the object or objects to be washed.

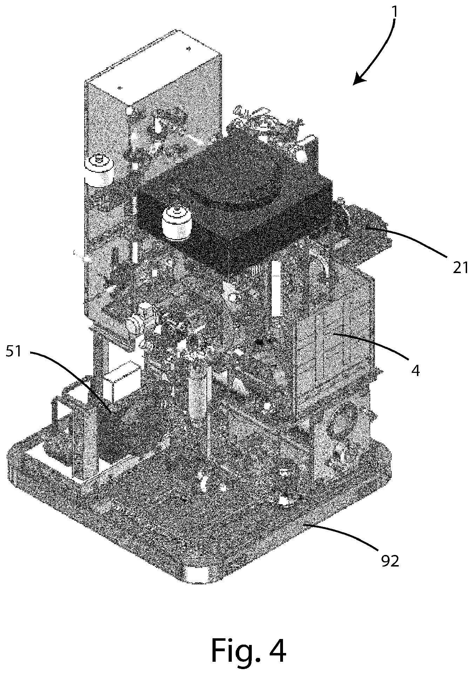

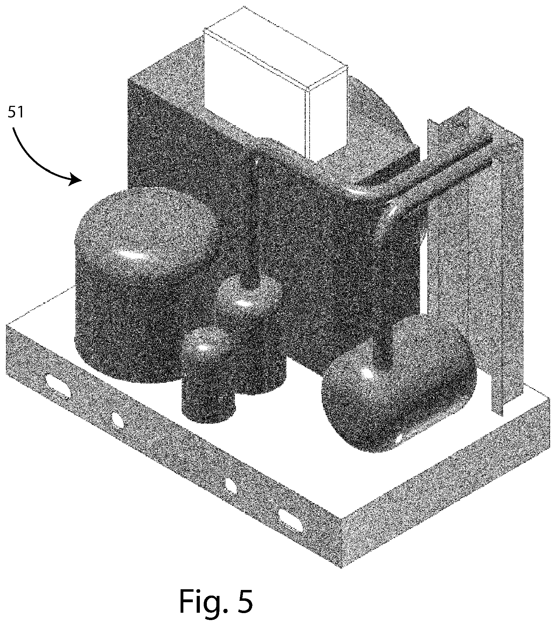

Figure 4 shows the open machine 1 and the refrigerating machine 51, visible in detail in figure 5, the drum 21 and the distiller 4 can be distinguished.

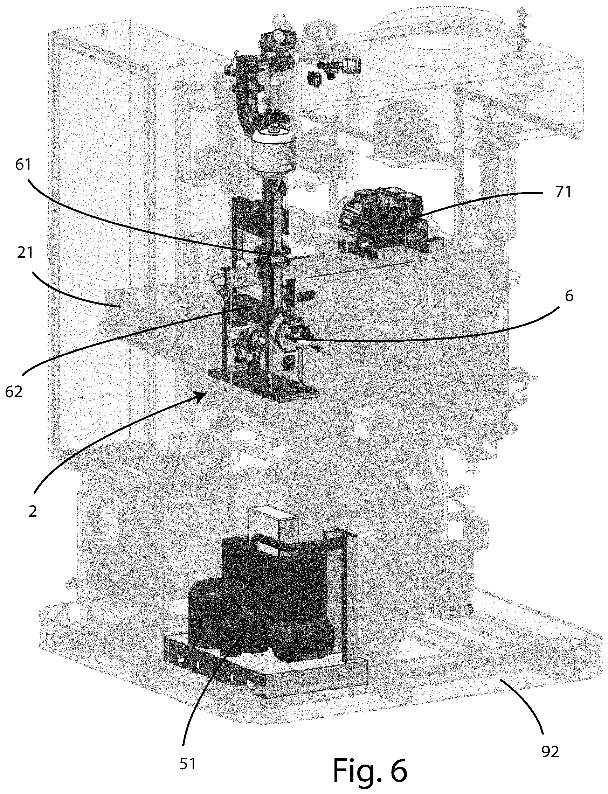

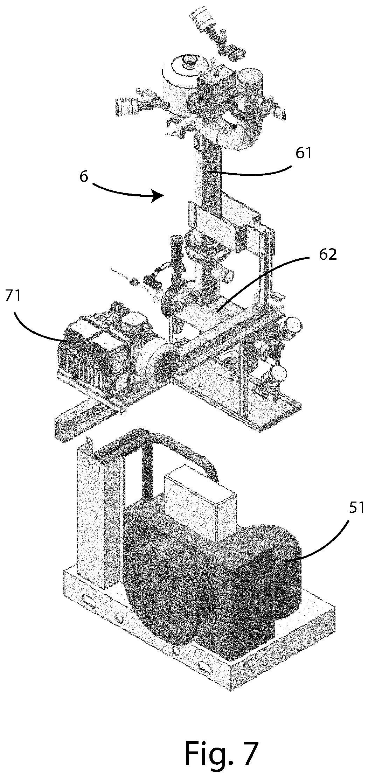

With reference now in particular to figures 6 and 7, the positioning of the heat exchanger unit 6, and in particular of the first heat exchanger 61 and of the second heat exchanger 62, is also observed. Furthermore, in the same figures, the positioning of the vacuum pump 71 can be seen.

In particular, figure 7 shows the arrangement of the heat exchanger unit 6 again.

Of course, the layout shown in figures 3-7 is merely an example and other construction layouts may be provided without thereby departing from the scope of the invention.

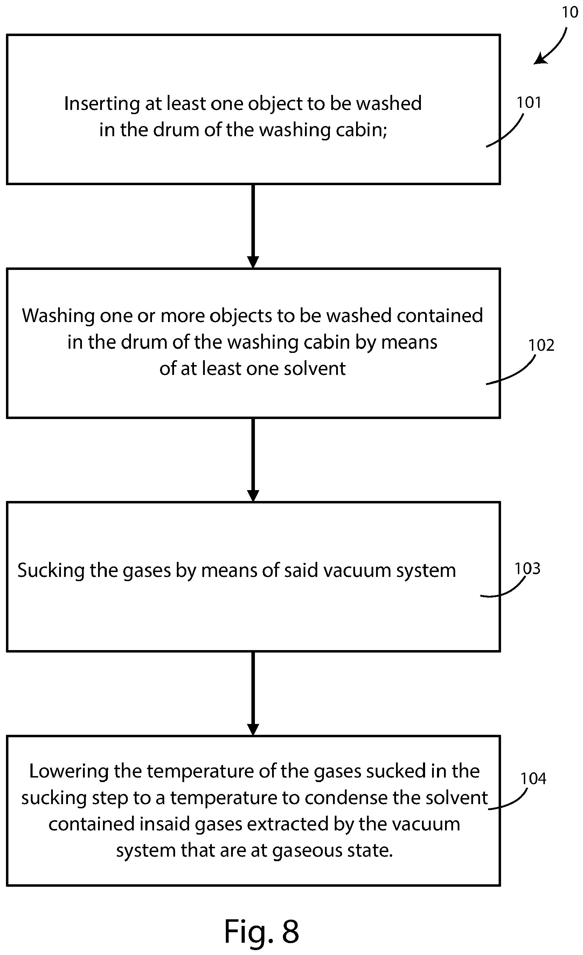

Figure 8 shows the steps of the method of operation 10 of the machine for washing objects 1 according to the present invention. This method includes the following steps:
- introducing 101 at least one object to be washed into the drum 21 of the washing cabin 2;
- carrying out 102 the washing of one or more objects to be washed contained in the drum 21 of the washing cabin 2 by means of a solvent;
- aspirating 103 the gases by means of the vacuum system 7, containing vapors of the solvent used for washing collected by means of said pipes 72 and aspirated by means of said vacuum pump 71;
- lowering 104 the temperature of the gases sucked in said aspiration step 103 to a temperature range such as to allow the liquefaction of the solvent in the gaseous state present in said gases extracted from said vacuum system.

In particular, said step of lowering the temperature 104 lowers the temperature of the gases sucked by said vacuum pump in a range between -23 °C and -27 °C, before they reach the vacuum pump 71, when said washing unit 11 works by using a solvent belonging to the category of chlorinated halogenates, in particular perchloroethylene, in order to condense the solvent contained in said gases.

The lowering of the temperature takes place through the heat exchanger unit 6.

Naturally, if the washing unit 11 operated by means of modified alcohol, in the step of lowering the temperature 104 the heat exchanger unit 6 would reduce the temperature of the gases to -15 °C ± 2 °C.

### Advantages

An advantage of the present invention is to allow the design and construction of machines for washing metal parts without the use of expensive filters for filtering the particles of solvents, and in particular, of perchloroethylene, which contain activated carbon granules and, once saturated, they must be disposed of as noxious toxic waste and replaced with new ones.

A further advantage of the present invention is that the machine for washing metal parts can operate alternatively both with perchloroethylene and with modified alcohol.

The other aspect is the possibility of using a single vane vacuum pump instead of two vacuum pumps, in fact, in the prior art typically perchloroethylene must be a liquid ring pump, while for the alcohol the vane type is necessary.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine for washing objects (1), such as metallic and non-metallic objects, in particular for washing metal parts, comprising:
a washing unit (11), comprising
a washing cabin (2) for washing one or more objects to be washed, by means of at least one solvent, and
at least one tank (31, 32) for containing said at least one solvent for washing one or more objects; and
a vacuum maintenance system (7) comprising
pipelines (72), connected for extracting gas from said washing unit (11), wherein said gases include solvent vapours, and
a vacuum pump (71), connected to said pipelines (72), configured for sucking said gases collected in said pipelines (72);
**characterized in that** it comprises a cooling unit (12) having a heat exchanger unit (6),
wherein said heat exchanger unit (6) is connected between said pipelines (72) and said vacuum pump (71), and
wherein said heat exchanger unit (6) is configured for lowering the temperature of said gases collected in said pipelines (72), so as to condense the solvent contained in said gases, wherein said at least one solvent used for washing in said washing unit (11) belongs to the category of chlorinated halogenates, in particular perchloroethylene.

2. Machine (1) according to any one of the preceding claims, **characterized in that** said heat exchanger unit (6) is configured to lower the temperature of said gases extracted by said vacuum pump (71) to a temperature range between -23°C and -27°C, when said solvent used for washing in said washing unit (11) is a solvent of the chlorinated halogenates category, in particular perchloroethylene.

3. Machine (1) according to the preceding claim, **characterized in that** said heat exchanger unit (6) is configured to lower the temperature of said gases extracted by said vacuum pump (71) to a temperature of - 25 °C.

4. Machine (1) according to any one of the preceding claims, **characterized in that** said heat exchanger unit (6) is configured to lower the temperature of said gases extracted by said vacuum pump (71) to a temperature range between -13°C and -17°C, when the solvent used for washing in said washing unit (11) is modified alcohol.

5. Machine (1) according to any one of the preceding claims, **characterized in that** said heat exchanger unit (6) comprises
a first heat exchanger (61), for effectively condensing solvent vapours contained in the gases sucked by said vacuum pump (71) from said pipelines (72) of said vacuum system (7), and
a second heat exchanger (62) for maintaining the solvent condensed by said first heat exchanger (61) in a liquid state.

6. Machine (1) according to the preceding claim, **characterized in that** it comprises a solvent separator (8), connected to said second heat exchanger (62), which is configured to separate the solvent from the possible aqueous component, so that it can be recycled, when said at least one solvent used for washing in said washing unit (11) is a solvent of the chlorinated halogenates category, such as perchloroethylene.

7. Machine (1) according to any one of the preceding claims, **characterized in that** said cooling unit (12), comprises a cooling system (5) comprising
a pipeline circuit (53) containing a mixture of water and glycol, and
a heat exchanger (52) connected to a refrigeration machine (51) for cooling said mixture of water and glycol contained in said pipelines (53),
wherein said refrigeration machine (51) is configured to cool the mixture of water and glycol to a temperature of -15 ±2°C, when said at least one solvent used for washing in said washing unit (11) is modified alcohol, and to about -25°C ±2°C when said solvent used for washing in said washing unit (11) belongs to the chlorinated halogenates category, in particular perchloroethylene.

8. Machine (1) according to any one of the preceding claims, **characterized in that** said washing unit comprises a distiller (4) hydraulically connected to said washing cabin (2), so that the solvent for washing the objects contained into said washing cabin (2) can be sucked from said washing cabin (2) and distilled by the distiller (4) and recovered in said at least one tank (31, 32).

9. Operating method (100) of a machine for washing objects (1), such as metallic and non-metallic objects, wherein said machine (1) is of the type according to any one of the preceding claims, and wherein said method comprises the following steps:
inserting (101) at least one object to be washed in said said washing cabin (2);
washing (102) one or more objects to be washed contained in said washing cabin (2) by means of at least one solvent;
sucking (103) the gases by means of said vacuum system (7), containing the vapours of the solvent, used for washing, collected by said pipelines (72) and sucked by said vacuum pump (71);
lowering (104) the temperature of said gases sucked in said sucking step (103) to a temperature range between -23°C and -27°C, before they arrive at said vacuum pump (71), when said washing unit (11) works using a solvent belonging to the chlorinated halogenates category, in particular perchloroethylene, so as to condense the solvent contained in said gases.

10. Method (100) according to the preceding claim according to the preceding claim, **characterized in that** said at least one solvent includes perchloroethylene.

11. Method (100) according to any one of claims 9 or 10, when dependent on claim 5, **characterized in that** said temperature lowering step (104) comprises the following sub-steps:
- lowering the temperature of said gases sucked in said sucking step (103) to a temperature range between -23°C and -27°C, before they arrive at said vacuum pump (71), when said washing unit (11) works using a solvent belonging to the chlorinated halogenates category, in particular perchloroethylene, by means of said first heat exchanger (61) of said heat exchanger unit (6); and
- maintaining the solvent condensed by said first heat exchanger (61) in a liquid state by means of said second heat exchanger (62) of said heat exchanger unit (6).

12. Method (100) according to any one of claims 9-11, when dependent on claim 6, **characterized in that** it comprises the further step of picking up the condensed solvent in said temperature lowering step (104) by means of a solvent separator (8), connected to said second heat exchanger (62), wherein said solvent separator (8) is capable of separating said at least one solvent from any aqueous component, so that it can be recycled, when said solvent is a solvent belongs to the chlorinated halogenates category, such as perchloroethylene.
